## Europäisches Patentamt
## European Patent Office
## Office européen des brevets

(11) Veröffentlichungsnummer : **0 394 625 B1**

(12) **EUROPÄISCHE PATENTSCHRIFT**

(45) Veröffentlichungstag der Patentschrift :
**21.10.92 Patentblatt 92/43**

(51) Int. Cl.⁵ : **F16J 15/447,** B30B 15/00

(21) Anmeldenummer : **90102625.2**

(22) Anmeldetag : **10.02.90**

(54) Separiereinrichtung.

(30) Priorität : **27.04.89 DE 8905305 U**

(43) Veröffentlichungstag der Anmeldung :
**31.10.90 Patentblatt 90/44**

(45) Bekanntmachung des Hinweises auf die Patenterteilung :
**21.10.92 Patentblatt 92/43**

(84) Benannte Vertragsstaaten :
**AT BE CH DE DK ES FR GB IT LI NL SE**

(56) Entgegenhaltungen :
**DD-C- 96 155**
**DE-C- 2 159 465**
**DE-C- 2 843 198**

(73) Patentinhaber : **NORDISCHER MASCHINENBAU RUD. BAADER GMBH + CO KG**
**Geniner Strasse 249**
**W-2400 Lübeck (DE)**

(72) Erfinder : **Rose, Wolfgang, Dipl.-Ing.**
**Dorfstrasse 19a**
**W-2406 Eckhorst (DE)**
Erfinder : **Ziebell, Klaus**
**Am Schwarzen Berg 10**
**W-2400 Lübeck (DE)**

EP 0 394 625 B1

## Beschreibung

Die Erfindung betrifft eine Einrichtung zum Trennen von miteinander vermischten fließfähigen und nicht fließfähigen Bestandteilen insbesondere zum Zwecke des Aufbereitens von Lebensmitteln, umfassend eine umlaufend angetriebene, mindestens mit einem Austragende versehene hohlzylinderförmige Separiertrommel mit perforierter Mantelfläche, ein die Separiertrommel auf einem Teil ihres Umfanges umschlingendes, durch Spann- und Anpreßmittel an die Mantelfläche anpreßbares und mit dieser im wesentlichen synchron umlaufendes, elastisches Preßband, welches zwischen zwei Seitenwänden geführt ist und mit der Mantelfläche der Separiertrommel einen mit Preßgut beschickbaren Einzugkeil bildet, dessen seitliche Begrenzung durch die Seitenwände erfolgt, und wobei mindestens eine derselben von dem Austragende der Separiertrommel unter Belassen eines engen Dichtspaltes durchdrungen wird.

Eine derartige Einrichtung ist beispielsweise aus der DD-C-96 155 zu entnehmen.

Mit Einrichtungen dieses Konstruktionsprinzips lassen sich in kontinuierlichem Prozeß z. B. Brätmassen aus einem Sehnen-Fleisch-Gemisch zur Wurstherstellung gewinnen, gekochte Kartoffeln pürieren und fehlerverpackte Butter- und Käsemassen sowie die Inhalte von Joghurtbechern u. ä. rückgewinnen, kurz gesagt neben Separierprozessen eine Vielzahl von Vermusungsprozessen durch führen.

Die Arbeitsweise dieser Einrichtung ist unkompliziert und das Arbeitsergebnis hervorragend, doch zeigt sich ein systembedingter nachteiliger Effekt, der darin besteht, daß im Bereich der Umschlingung des Hohlzylinders durch das Preßband Leckverluste an Preßgut auftreten. Ursache dafür ist der in diesem Bereich durch den Andruck des Preßbandes an die Separiertrommel zwischen diesen Elementen erzeugte und auf das Preßgut einwirkende quasi-hydraulische Druck, der zu einem nicht verhinderbaren Auftreiben des Preßbandes in dessen Randbereichen und damit zum seitichen Abfluß von Preßgut durch den Dichtspalt zwischen Separiertrommel und Seitenwand hindurch führt. Das dadurch neben der Separiertrommel austretende Preßgut ist qualitativ so beeinträchtigt, daß dieses nicht mehr brauchbar ist.

In der DE-C-2 159 465 ist eine Maßnahme beschrieben, die u. a. darauf zielt, diesen Verlust zu mindern. Diese Maßnahme besteht in der Anordnung kufenförmiger Bandandrücker im Bereich der Umschlingung der Separiertrommel durch das Preßband in dessen Randbereichen. Damit wird zwar eine gewisse Minderung des Leckflusses erreicht, doch befriedigt das Ergebnis hinsichtlich des Besserungsgrades nicht und auch deshalb nicht, weil nunmehr erhöhter Bandverschleiß in den Stützbereichen der Bandandrücker auftraten.

Es ist daher die Aufgabe der Erfindung, ein Konzept vorzuschlagen, welches einen Leckfluß an Preßgut praktisch vollständig unterbindet, ohne dabei negativen Einfluß auf das Verschleißverhalten irgendwelcher Maschinenteile auszuüben.

Diese Aufgabe wird erfindungsgemäß dadurch gelöst, daß die den Dichtspalt begrenzende äußere Fläche mit einem als radialer Einstich ausgeführten Kanal versehen ist, der sich wenigstens über den Bereich der Umschlingung der Separiertrommel durch das Preßband erstreckt, und der im Bereich des Einzugkeils eine den Kanal mit diesem Raumbereich verbindenden Durchbruch aufweist.

Die damit erzielbaren Vorteile bestehen insbesondere darin, daß das zwischen Preßband und Separiertrommel seitlich austretende Preßgut praktisch unmittelbar, d. h. vor Eintreten einer Schädigung intern aufgefangen und so geführt wird, daß es dem Weg des geringeren Widerstandes folgend in den druckfreien Raumbereich des Einzugkeils zurückleitbar ist. Dabei wird dieser Effekt dadurch unterstützt, daß die den Dichtspalt begrenzende, durch den entsprechenden Teil des Austragendes der Separiertrommel gebildete Fläche infolge ihrer relativen Bewegung gegenüber der äußeren Fläche eine Förderwirkung auf das in den Kanal eingeflossene Preßgut ausübt, die es dem Durchbruch im Bereich des Einzugkeils zuträgt.

Nach einer Ausgestaltung der Erfindung kann der Kanal einen schraubenförmigen Verlauf aufweisen, wobei dessen Auslauf den diesen mit dem Raumbereich des Einzugkeils verbindenden Durchbruch bildet.

Schließlich kann nach einer bevorzugten Ausgestaltung vorgesehen sein, daß der Querschnitt des Kanals zu dem diesen mit dem Raumbereich des Einzugkeils verbindenden Durchbruch hin zunimmt. Der damit erzielbare Vorteil besteht darin, daß der Fließwiderstand zum Durchbruch hin abnimmt, was dazu beiträgt, den noch verbleibenden Leckfluß weiter zu minimieren.

Die Erfindung wird nachfolgend anhand eines in der Zeichnung dargestellten Ausführungsbeispiels näher erläutert. Es zeigt

Fig. 1 eine stark vereinfachte Darstellung der erfindungsgemäßen Separiereinrichtung als Zerfallbild in axonometrischer Wiedergabe,

Fig. 2 das die erfindungsgemäße Maßnahme wiedergebende Bauelement in axonometrischer Darstellung von der Rückseite betrachtet,

Fig. 3 einen Querschnitt des Bauelementes gemäß Fig. 2 , geschnitten längs der Schnittlinie III - III ,

Fig. 4 einen Querschnitt gemäß Fig. 3 eines modifizierten Bauelementes.

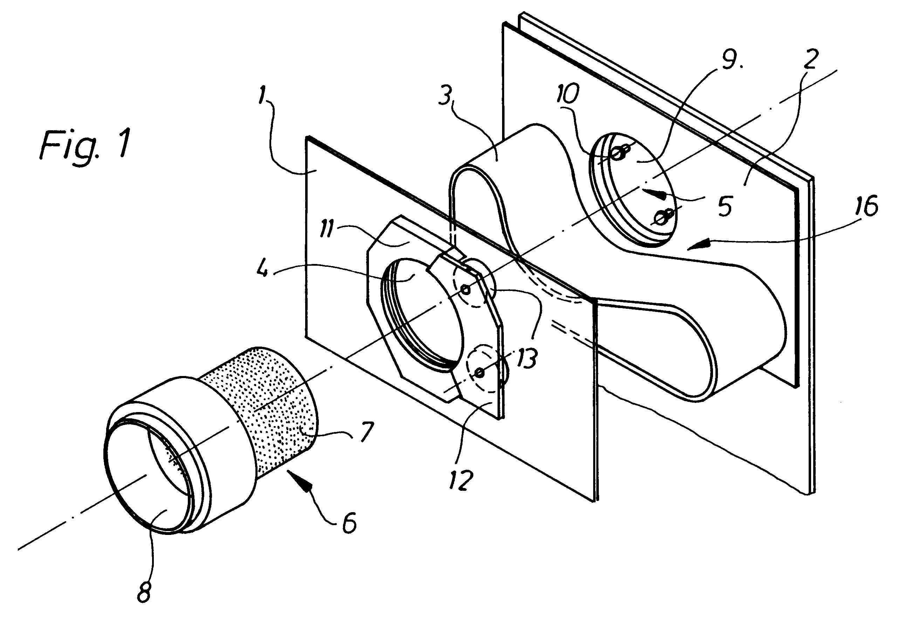

Bei der Darstellung gemäß Fig. 1 sind aus Gründen der Übersichtlichkeit Gestell, Lagerungen, Getriebe, Antriebe und Preßband-Umlenkwalzen nicht gezeigt. Wie zu erkennen ist, sind zwei Seitenwände 1 und 2 vorgesehen, die in Funktionsstellung einen Abstand zueinander einnehmen, der der Breite eines Preßbandes 3 entspricht und die jeweils einen Durchbruch 4 und 5 für die Aufnahme einer Separiertrommel 6 aufweisen . Die Separiertrommel 6 ist im Bereich des nach Montage zwischen den Seitenwänden 1 und 2 befindlichen Trommelteils mit einer perforierten Mantelfläche 7 versehen, an die sich ein nicht perforierter Trommelteil anschließt, der das Austragende 8 der Separiertrommel 6 bildet. Letztere wird getriebeseitig in einem nur angedeutet dargestellten Antriebsflansch 9 aufgenommen und mittels Bundbolzen 10 durch Aufstecken auf dieselben axial und durch Verdrehung radial fixiert. Austragsseitig ist die Separiertrommel 6 in einem an der Außenfläche der Seitenwand 1 und koaxial zu dem Durchbruch 4 befestigten Flanschsegment 11 geführt, dessen Innenkontur mit der Separiertrommel 6 einen engen Dichtspalt bildet. Das Flanschsegment 11 wird durch ein Stützelement 12 zu einem die Separiertrommel 6 vollständig umfassenden Bauteil ergänzt, wobei die Abstützung der Separiertrommel 6 mittels zweier mit der Mantelfläche des Austragendes 8 derselben in Kontakt tretenden Stützrollen 13 erfolgt. Das Preßband 3 ist aus einem flexiblen Werkstoff und endlos gefertigt und wird mittels nicht gezeigter Umlenkwalzen so geführt, daß es an der Mantelfläche 7 der Separiertrommel 6 unter teilweiser Umschlingung derselben anliegt. Dabei ist die höchst gelegene Umlenkwalze in ihrem Abstand zu der Separiertrommel 6 verstellbar ausgeführt, so daß das Preßband 3 in diesem Bereich unter einstellbarem Druck gegen die Mantelfläche 7 der Separiertrommel 6 gepreßt werden kann. Die entstehende Druckkomponente wird dabei von den Stützrollen 13 aufgefangen .

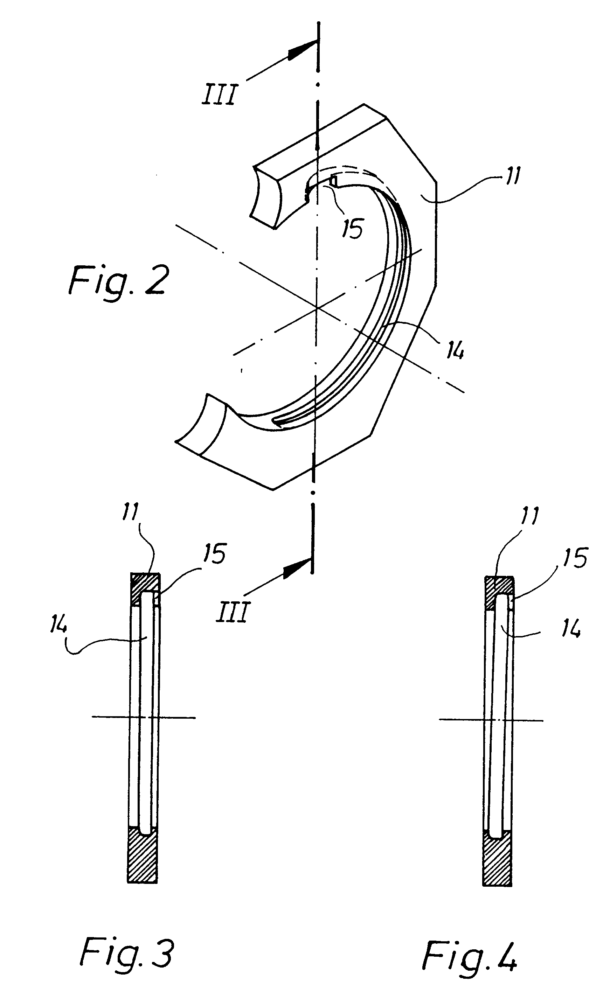

Das Flanschsegment 11 ist, wie am besten aus den Figuren 2 und 4 erkennbar an seiner Innenkontur mit einem Einstich versehen, der durch die Mantelfläche der Separiertrommel 6 zu einem geschlossenen Kanal 14 geformt wird. Der Kanal 14 ist etwa an seiner höchsten Stelle mittels eines Durchbruchs 15 zur Innenfläche des Flanschsegmentes 11 hin geöffnet. Gemäß Fig. 3 verläuft der Kanal 14 parallel zu den Außenflächen des Flanschsegmentes 11 , gemäß Fig. 4 schraubengangförmig.

Im Betrieb wird die Separiertrommel 6 und die nicht gezeigte, gegen diese anpreßbare Umlenkwalze im Uhrzeigersinn angetrieben. Dabei wird das in den Einzugkeil 16 zwischen Preßband 3 und Separiertrommel 6 eingebrachte Preßgut zwischen diese beiden Bauteile eingezogen und einer zunehmenden Pressung unterworfen, die im Bereich der nicht gezeigten anpreßbaren Umlenkwalze ihr Maximum erreicht. Dabei fließen die fließfähigen Bestandteile durch die Perforationen in der Mantelfläche 7 der Separiertrommel 6 in das Innere derselben ab und können durch eine nicht gezeigte Austragschnecke entnommen werden. Infolge der Pressung des Preßgutes tritt im Randbereich des Preßbandes 3 ein Leckfluß auf, der sich seinen Weg durch den Dichtspalt zwischen Flanschsegment 11 und Separiertrommel 6 an dieser vorbei nach außen sucht. Das leckfließende Preßgut trifft dabei jedoch auf den Kanal 14 , der diesem einen Weg geringeren Fließwiderstandes bietet und das leckfließende Preßgut, unterstützt durch die drehbewegte Separiertrommel 6 , dem Durchbruch 15 zufördert, durch den es in den drucklosen Raumbereich des Einzugkeils 16 zurückgeführt wird.

## Patentansprüche

1. Einrichtung zum Trennen von miteinander vermischten fließfähigen und nicht fließfähigen Bestandteilen insbesondere zum Zwecke des Aufbereitens von Lebensmittel, umfassend eine umlaufend angetriebene mindestens mit einem Austragende (8) versehene hohlzylinderförmige Separiertrommel mit perforierter Mantelfläche, ein die Separiertrommel (6) auf einem Teil ihres Umfanges umschlingendes, durch Spann- und Anpreßmittel an die Mantelfläche anpreßbares und mit dieser im wesentlichen synchron umlaufendes, elastisches Preßband (3), welches zwischen zwei Seitenwänden (1;2) geführt ist und mit der Mantelfläche (7) der Separiertrommel (6) einen mit Preßgut beschickbaren Einzugkeil bildet, dessen seitliche Begrenzung durch die Seitenwände (1;2) erfolgt, und wobei mindestens eine derselben von dem Austragende (8) der Separiertrommel (6) unter Belassen eines engen Dichtspaltes durchdrungen wird, **dadurch gekennzeichnet,** daß die den Dichtspalt begrenzende äußere Fläche mit einem als radialer Einstich ausgeführten Kanal (14) versehen ist, der sich wenigstens über den Bereich der Umschlingung der Separiertrommel (6) durch das Preßband (3) erstreckt, und der im Bereich des Einzugkeils (16) eine den Kanal (14) mit diesem Raumbereich verbindenden Durchbruch (15) aufweist.

2. Einrichtung nach Anspruch 1 , **dadurch gekennzeichnet,** daß der Kanal (14) einen schraubengangförmigen Verlauf aufweist, wobei dessen Auslauf den diesen mit dem Raumbereich des Einzugkeils (16) verbindenden Durchbruch (15) bildet.

3. Einrichtung nach den Ansprüchen 1 und 2 , **dadurch gekennzeichnet,** daß der Querschnitt des Kanals (14) zu dem diesen mit dem Raumbereich des Einzugkeils (16) verbindenden Durchbruch (15) hin zunimmt.

## Claims

1. Equipment for the separation of intermixed flowable and non-flowable components, especially for the purpose of preparation of foodstuffs, comprising a rotationally driven, hollow cylindrical separating drum having a perforated shell surface and provided at least with one delivery end (8), an elastic press belt (3) which loops around the separating drum (6) on a part of its circumference, is pressable against the shell surface by tensioning and pressing means, circulates substantially synchronously with this surface, is guided between two side walls (1; 2) and forms with the shell surface (7) of the separating drum (6) an intake cone, which is chargeable with stock to be pressed and the lateral bounding of which is effected by the side walls (1; 2), and wherein at least one of the same is penetrated by the delivery end (8) of the separating drum (6) while leaving a narrow sealing gap, characterised thereby that the outer surface bounding the sealing gap is provided with a channel (14) which is constructed as a radial recess, extends at least over the region of the looping of the separating drum (6) by the press belt (3) and has in the region of the intake cone (16) an opening (15) connecting the channel (14) with the spatial region thereof.

2. Equipment according to claim 1, characterised thereby that the channel (14) has a screwthread course, wherein the outlet thereof forms the opening (15) connecting this with the spatial region of the intake cone (16).

3. Equipment according to claims 1 and 2, characterised thereby that the cross-section of the channel (14) increases towards the opening (15) connecting this with the spatial region of the intake cone (16).

## Revendications

1. Dispositif de séparation de composants coulants et non coulants mélangés entre eux, en particulier dans le but de préparer des produits alimentaires, comprenant un tambour de séparation en forme de cylindre creux à surface d'enveloppe perforée, entraîné à rotation, pourvu d'au moins une-extrémité de décharge (8), une bande élastique de pression (3) qui entoure le tambour de séparation (6) sur une partie de sa périphérie, peut être pressée contre la surface d'enveloppe par des moyens de tension et de pression, circule de façon sensiblement synchrone avec celui-ci, est guidée entre deux parois latérales (1; 2) et constitue avec la surface d'enveloppe (7) du tambour de séparation (6) un coin de chargement, qui peut être garni de matières à comprimer et dont la limite latérale est constituée par les parois latérales (1; 2), au moins l'une de celles-ci étant traversée par l'extrémité de décharge (8) du tambour de séparation (6) en laissant un mince intervalle d'étanchéité, **caractérisé en ce que** la surface extérieure limitant l'intervalle d'étanchéité est pourvue d'un canal (14) exécuté en forme d'encoche radiale, qui s'étend au moins sur la zone où le tambour de séparation (6) est entouré par la bande de pression (3) et qui présente dans la zone du coin de chargement (16), un orifice (15) reliant le canal (14) à cette zone spatiale.

2. Dispositif selon la revendication 1, **caractérisé en ce que** le tracé du canal (14) est en hélice, la sortie de celle-ci constituant l'orifice (15) qui la relie avec la zone spatiale du coin de chargement (16).

3. Dispositif selon l'une des revendications 1 et 2, **caractérisé en ce que** la section transversale du canal (14) augmente en direction de l'orifice (15) reliant celui-ci à la zone spatiale du coin de chargement (16).

Fig. 1

EP 0 394 625 B1

Fig. 2

Fig. 3

Fig. 4